# DEMANDE DE BREVET EUROPEEN

(11) **EP 1 884 744 A1**
(43) Date de publication de la demande: **06.02.2008**
(21) Numéro de dépôt: 07301241.1
(22) Date de dépôt: 17.07.2007
(51) Int. Cl.: G01C 21/36, G08G 1/0967

(54) **Procédé de détermination d'une zone d'intérêt dans un système d'aide à la navigation d'un utilisateur de véhicule**

(30) Priorité: 28.07.2006 FR 0653170
(71) Demandeur: PEUGEOT CITROËN AUTOMOBILES S.A., 78140 Velizy Villacoublay (FR)
(72) Inventeur: Soligon, Olivier, 78990 Elancourt (FR)

(57) **Abrégé**

L'invention concerne un procédé de détermination, dans un système d'aide à la navigation d'un utilisateur de véhicule automobile (VA), d'une zone d'intérêt (Z) englobant un itinéraire (I) d'un trajet (T_{AB}) effectué régulièrement, pour fournir, à un utilisateur, des informations de trafic relatives à cette zone d'intérêt (Z), comprenant les étapes de :
- Mémorisation de points de passage (x₁, x₂, x₃) de l'itinéraire (I);
- Découpage de l'itinéraire (I) en segments adjacents (S₁, S₂, S₃, S₄) ayant pour extrémités des points de passage;
- Détermination pour chaque segment (S₁, S₂, S₃, S₄) d'une zone géographique élémentaire (E₁, E₂, E₃, E₄);
- Constitution de la zone d'intérêt (Z) par réunion des zones géographiques élémentaires (E₁, E₂, E₃, E₄).

## Description

L'invention concerne un procédé de détermination d'une zone d'intérêt dans un système d'aide à la navigation d'un utilisateur de véhicule, tel qu'un véhicule automobile, et un système d'aide à la navigation implémentant un tel procédé. Le système d'aide à la navigation comprend une unité embarquée dans le véhicule pour fournir à l'utilisateur des instructions de guidage.

Dans les systèmes d'aide à la navigation connus, l'unité embarquée comprend des moyens de communication à distance avec un réseau distant de géopositionnement, tel que le réseau Global Positioning System (GPS), pour déterminer et mettre à jour la position courante du véhicule.

Cette unité embarquée comprend d'autre part des moyens de saisie avec lesquels l'utilisateur peut entrer une adresse correspondant par exemple à sa destination.

L'unité embarquée comprend encore des moyens de communication avec un réseau externe d'informations de trafic, tels que le service V-Trafic, lui permettant de recevoir en temps réel des informations d'état du trafic.

Lorsque le système est utilisé en mode dit guidé, il propose à l'utilisateur un itinéraire optimal pour se rendre à l'adresse de destination. Cet itinéraire optimal est déterminé, sur la base de la position courante du véhicule, de l'adresse de destination, de données cartographiques numérisées, et des informations de trafic.

En mode non guidé, le système ne détermine pas d'itinéraire optimal, mais il fournit simplement les informations de trafic à l'utilisateur, via par exemple un haut-parleur. Elles lui permettent de prendre connaissance en temps réel des événements tels qu'embouteillages, accidents ou autres, à partir desquels il modifie volontairement son itinéraire, le cas échéant.

Les informations de trafic fournies à l'utilisateur sont celles correspondant à une zone d'intérêt définie par le système et conditionnée notamment par la position courante du véhicule.

Le mode non guidé permet à l'utilisateur de disposer d'une aide à la navigation sommaire sans qu'il lui soit nécessaire de saisir explicitement son adresse de destination.

Cependant, il s'avère que dans les systèmes actuels, la zone d'intérêt est généralement trop étendue ou inadaptée. Il s'ensuit que l'utilisateur reçoit une trop grande quantité d'informations de trafic, ce qui le déconcentre puisqu'il doit trier parmi les informations qui lui sont fournies, celles qui le concernent réellement.

Le but de l'invention est de proposer une solution pour déterminer une zone d'intérêt optimale dans le cas où l'utilisateur effectue un trajet fréquent.

A cet effet, l'invention concerne un procédé de détermination, dans un système d'aide à la navigation d'un utilisateur de véhicule automobile, d'une zone d'intérêt englobant un des itinéraires d'un trajet effectué régulièrement, pour fournir, à un utilisateur du système, des informations de trafic relatives à cette zone d'intérêt, comprenant les étapes de :
- Mémorisation de plusieurs points de passage de l'itinéraire effectivement emprunté;
- Découpage de l'itinéraire effectivement emprunté en un ou plusieurs segments adjacents, les extrémités de chaque segment correspondant à des points de passage sélectionnés parmi les points de passage effectifs;
- Détermination pour chaque segment d'une zone géographique élémentaire englobant ce segment;
- Constitution de la zone d'intérêt par réunion des zones géographiques élémentaires et mémorisation de cette zone d'intérêt.

Selon une autre caractéristique de l'invention, l'itinéraire est découpé en plusieurs segments adjacents, si la distance séparant le point de départ et d'arrivée du trajet est supérieure à une valeur prédéterminée.

Selon une autre caractéristique de l'invention, le découpage est effectué de telle manière que les extrémités de chaque segment sont séparées par une distance inférieure à la valeur prédéterminée.

Selon une autre caractéristique de l'invention, chaque zone géographique élémentaire relative à un segment est une ellipse englobant les points de passage de l'itinéraire effectivement emprunté qui sont séparés du segment par une distance inférieure à la demi-longueur de ce segment.

Selon une autre caractéristique de l'invention, lorsque l'utilisateur effectue le trajet en empruntant un nouvel itinéraire dont au moins un des points de passage diffère des points de passage d'un des itinéraires mémorisés, alors le nouvel itinéraire est mémorisé pour définir une nouvelle zone d'intérêt correspondant à un autre itinéraire possible pour le trajet régulièrement effectués.

Selon une autre caractéristique de l'invention, lorsque l'utilisateur effectue le trajet une zone d'intérêt active est sélectionnée parmi les zones d'intérêt mémorisées, dès que la position courante du véhicule est englobée dans une seule des zones d'intérêt mémorisées.

Selon une autre caractéristique de l'invention, lorsque la position courante est englobée dans deux zones d'intérêt distinctes, la zone d'intérêt active est l'intersection des zones d'intérêt.

Selon une autre caractéristique de l'invention, lorsque le point de départ et le point d'arrivée du trajet régulièrement effectué sont séparés par une distance inférieure à la valeur prédéterminée, tous les itinéraires de ce trajets sont définis par un seul segment et la zone d'intérêt est définie par une unique ellipse, et dans lequel les paramètres de cette ellipse sont mis à jour pour que cette ellipse englobe chaque point de passage du ou des itinéraires effectivement empruntés pour lequel la distance séparant ce point de passage du segment S est inférieure à la demi-longueur de ce segment.

L'invention concerne également un système d'aide à la navigation d'un utilisateur de véhicule automobile comprenant des moyens de géopositionnement du véhicule, des moyens de mémorisation de points de passage du véhicule, des moyens de transmission à l'utilisateur d'informations de trafic concernant des évènements se déroulant dans une zone d'intérêt, des moyens de saisie permettant à l'utilisateur d'indiquer que le véhicule effectue un trajet régulier entre un point de départ et un point d'arrivée, et des moyens de mise en oeuvre du procédé selon l'une des revendications précédentes.

L'invention sera maintenant décrite en détail, en référence aux figures annexées.
- la figure 1 est une représentation schématique d'une zone d'intérêt géographique, définie par le procédé selon l'invention, pour un trajet dont la distance séparant les points de départ et d'arrivée est inférieure à une valeur donnée;
- la figure 2 est une représentation schématique d'une zone d'intérêt géographique, définie par le procédé selon l'invention, pour un trajet dont la distance séparant les points de départ et d'arrivée est supérieure à une valeur donnée;
- la figure 3 est une représentation schématique d'une autre zone d'intérêt géographique, définie par le procédé selon l'invention, pour le trajet de la figure 2;
- la figure 4 est une représentation schématique d'une autre zone d'intérêt géographique, définie par le procédé selon l'invention, pour le trajet de la figure 2;
- la figure 5 est une représentation schématique d'une autre zone d'intérêt géographique, définie par le procédé selon l'invention, pour le trajet de la figure 2.

L'invention concerne un procédé de détermination d'une zone d'intérêt géographique Z et un système d'aide à la navigation d'un utilisateur de véhicule implémentant un tel procédé.

La détermination de cette zone d'intérêt Z permet au système d'aide à la navigation de sélectionner les informations de trafic à transmettre à l'utilisateur.

Le système selon l'invention implémente un procédé de détermination d'une zone d'intérêt Z englobant un des itinéraires **I** d'un trajet T_{AB} effectué régulièrement, pour fournir, à un utilisateur du système, des informations de trafic relatives à cette zone d'intérêt Z.

Pour ce faire, l'utilisateur donne au moins une fois au système le point de départ A et le point d'arrivée B de ce trajet habituel via les moyens de saisie du système. Le trajet T_{AB} peut par exemple être un trajet qu'il effectue quotidiennement pour aller de son domicile à son lieu de travail.

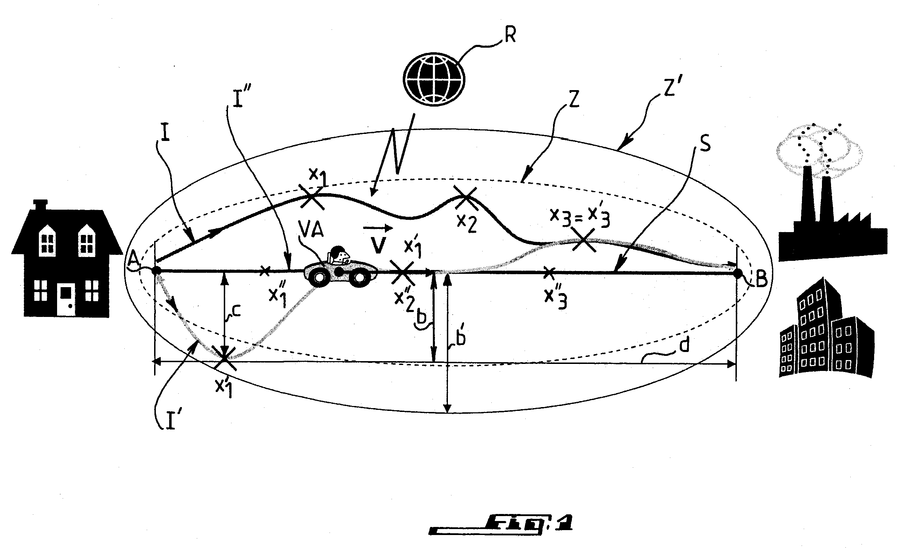

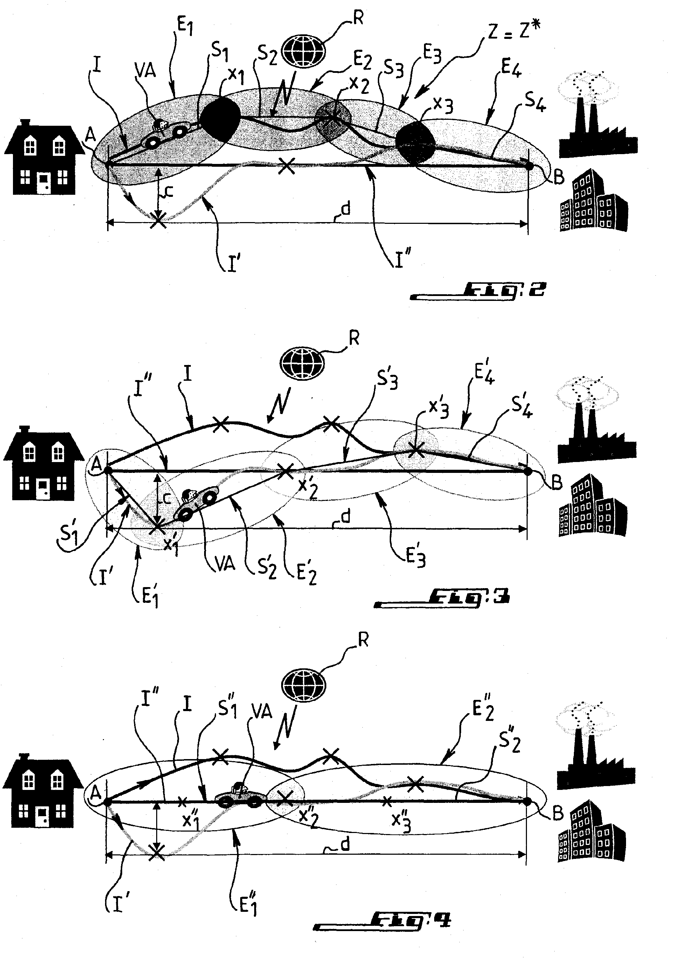

La zone d'intérêt Z déterminée par le procédé selon l'invention est soit elliptique, comme dans le cas représenté à la figure 1, soit formée par la réunion de plusieurs ellipses, comme dans les cas représentés aux figures 2 à 5.

Dans le cas représenté à la figure 1, le point de départ A et le point d'arrivée B du trajet T_{AB} sont séparés d'une distance d qui est inférieure à une valeur maximale donnée qui est préenregistrée dans le système, par exemple 50km.

Pour le même trajet T_{AB}, plusieurs itinéraires effectifs **I,I',I"** sont représentés, l'itinéraire **I** étant celui que l'utilisateur emprunte lors de la première utilisation du système pour ce trajet T_{AB}.

Chaque itinéraire **I,I',I"** comprend plusieurs points de passages parmi lesquels on a repéré les points x₁, x₂, x₃, x'₁, x'₂, x'₃, x"₁, x"₂, x"₃.

Lorsque pour la première fois, l'utilisateur indique au système qu'il effectue ce trajet T_{AB}, le système mémorise plusieurs points de passage, tels que x₁, x₂ et x₃, de l'itinéraire **I** effectivement emprunté.

A ce trajet T_{AB}, correspond un segment S ayant pour extrémités les points de départ A et d'arrivée B, le segment S ayant pour longueur la distance d séparant les points A et B.

Afin d'éviter que la zone d'intérêt Z ne soit trop étendue, parmi les points de passages mémorisés x₁, x₂ et x₃, seuls les points de passages qui sont séparés du segment S par une distance c inférieure à la demi-longueur d/2 de ce segment S sont sélectionnés.

Dans le cas représenté sur la figure 1, tous les points de passage X₁, X₂ et X₃ de l'itinéraire **I** remplissent cette condition et sont, par conséquent, sélectionnés.

La zone d'intérêt Z est alors définie par une ellipse englobant le segment S et ayant un grand axe aligné sur ce segment.

Le demi-petit axe b de l'ellipse formant la zone d'intérêt Z est défini de sorte que cette ellipse englobe tous les points de passage X₁, X₂ et X₃ qui ont été sélectionnés ainsi que les points de départ A et d'arrivée B.

Cette zone d'intérêt Z définie à partir d'un seul itinéraire **I** est ensuite mémorisée par le système pour un futur parcours de ce même trajet T_{AB}.

Lorsque l'utilisateur indique, lors d'une autre utilisation du système, qu'il va de nouveau parcourir le trajet T_{AB}, le système lui transmet les informations de trafic correspondant à la zone d'intérêt Z précédemment mémorisée et mémorise des points de passage x'₁, x'₂, x'₃ de l'itinéraire effectivement emprunté **I'**.

Parmi ces points de passage x'₁, x'₂, x'₃, des points de passage sont sélectionnés s'ils sont séparés du segment S par une distance c inférieure à la demi-longueur d/2 du segment S.

Si tous les points de passage x'₁, x'₂, x'₃ remplissent cette condition, alors le nouvel itinéraire **I**' est pris en compte pour définir une nouvelle zone d'intérêt Z'.

La nouvelle zone d'intérêt Z' est une ellipse englobant le segment S et ayant un grand axe aligné sur le segment S, le demi-petit axe b' de l'ellipse étant défini de sorte qu'elle englobe tous les points de passage x₁, x₂, x₃, x'₁, x'₂, x'₃ qui ont été sélectionnés.

Cette nouvelle zone d'intérêt Z' est mémorisée et sera exploitée lorsque l'utilisateur effectuera un futur parcours de ce trajet T_{AB}, notamment en empruntant un itinéraire **I"**.

Le système fonctionne de telle sorte qu'à chaque fois que l'utilisateur indique qu'il va de nouveau parcourir le trajet T_{AB}, les paramètres de l'ellipse sont mis à jour pour que cette ellipse englobe tous les points de passage x₁, x₂, x₃, x'₁, x'₂, x'₃, x"₁, x"₂, x"₃ des itinéraires **I,I',I"** effectivement empruntés pour lesquels la distance c séparant chaque point de passage x₁, x₂, x₃, x'₁, x'₂, x'₃, x"₁, x"₂, x"₃ du segment S est inférieure à la demi-longueur d/2 de ce segment S.

Dans le cas représenté sur les figures 2 à 5, le point de départ A et le point d'arrivée B du trajet T_{AB} sont séparés d'une distance d qui est supérieure à la valeur maximale donnée, qui vaut par exemple 50km.

Pour le même trajet T_{AB}, plusieurs itinéraires effectifs **I,I',I**" sont représentés, l'itinéraire **I** étant celui que l'utilisateur emprunte lors de la première utilisation du système pour ce trajet T_{AB}.

Chaque itinéraire **I,I',I**" comprend plusieurs points de passages parmi lesquels on a repéré x₁, x₂, x₃, x'₁, x'₂, x'₃, x"₁, x"₂, x"₃.

Comme représenté sur la figure 2, lorsque pour la première fois, l'utilisateur indique au système qu'il effectue ce trajet T_{AB}, le système mémorise plusieurs points de passage tels que x₁, x₂ et x₃ de l'itinéraire **I** effectivement emprunté.

La distance d séparant le point de départ A et d'arrivée B du trajet T_{AB} étant supérieure à la valeur prédéterminée, l'itinéraire **I** est découpé en plusieurs segments adjacents S₁, S₂, S₃, S₄ dont les extrémités correspondent à des points de passage sélectionnés parmi les points de passage effectifs A, X₁, X₂, X₃, B.

Ainsi, les points de passages sélectionnés sont tels que deux points de passage sélectionnés consécutifs sont séparés par une distance inférieure à la valeur maximale.

Pour chaque segment S₁, S₂, S₃, S₄, une ellipse E₁, E₂, E₃, E₄ est déterminée.

Cette ellipse E₁, E₂, E₃, E₄ a un grand axe aligné sur le segment S₁, S₂, S₃, S₄ et défini de sorte que l'ellipse englobe les extrémités du segment S₁, S₂, S₃, S₄. Chaque ellipse est définie par exemple de la même manière que dans le cas de la figure 1, de manière à comprendre les extrémités du segment auquel elle est associée, ainsi que les points de passage effectifs situés entre ces extrémités.

Dans le cas où les extrémités du segment S₁, S₂, S₃, S₄ correspondent à des points de passage mémorisés qui sont consécutifs, l'ellipse E₁, E₂, E₃, E₄ peut être déterminée à partir de paramètres par défaut. Par exemple, le petit axe de l'ellipse E₁, E₂, E₃, E₄ peut alors être défini comme valant le tiers de la longueur du grand axe, ce qui correspond sensiblement à l'exemple des figures 2 à 4.

La zone d'intérêt Z est alors constituée par la réunion des zones géographiques élémentaires E₁, E₂, E₃, E₄ de forme elliptique correspondant à l'itinéraire **I** effectivement emprunté.

Cette zone d'intérêt Z définie à partir d'un seul itinéraire **I** est ensuite mémorisée par le système pour un futur parcours de ce même trajet T_{AB}.

Lorsque l'utilisateur indique, lors d'une autre utilisation du système, qu'il va de nouveau parcourir le trajet T_{AB}, le système lui transmet les informations de trafic correspondant à la zone d'intérêt Z précédemment mémorisée et mémorise des points de passage x'₁, x'₂, x'₃ de l'itinéraire effectivement emprunté **I'**.

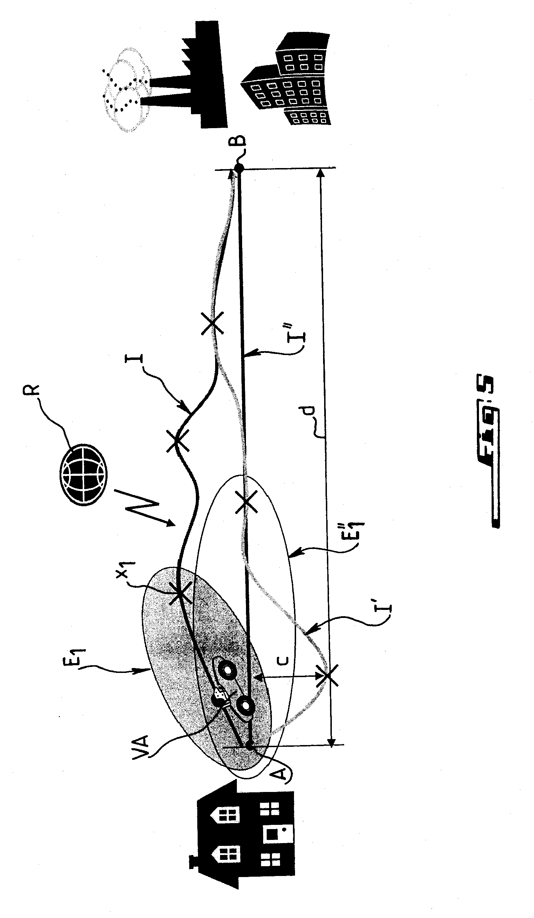

Comme représenté à la figure 3, la nouvelle zone d'intérêt Z' est déterminée de façon similaire à la définition de la zone d'intérêt Z de l'itinéraire **I**, c'est-à-dire par la réunion d'ellipses E'₁, E'₂, E'₃, E'₄ déterminées à partir de segments adjacents S'₁, S'₂, S'₃, S'₄ eux-mêmes déterminés à partir des points de passages x'₁, x'₂, x'₃.

Cette zone d'intérêt Z' définie à partir d'un seul itinéraire **I'** est ensuite mémorisée par le système pour un futur parcours de ce même trajet T_{AB}.

Le système fonctionne de telle sorte qu'à chaque fois que l'utilisateur indique qu'il va de nouveau parcourir le trajet T_{AB} et qu'il emprunte un nouvel itinéraire effectif, par exemple **I"**, une nouvelle zone d'intérêt Z", distincte des zones d'intérêt précédemment mémorisées Z, Z', est déterminée.

La nouvelle zone d'intérêt Z" englobe les points de passage x"₁, x"₂, x"₃ de l'itinéraire effectivement emprunté **I"**, comme représenté à la figure 4.

Lorsque l'utilisateur indique qu'il effectue le trajet T_{AB}, alors le système détermine la position courante du véhicule VA grâce aux moyens de géopositionnement et détermine si le véhicule VA emprunte un des itinéraires **I,I',I"** du trajet T_{AB} précédemment mémorisés.

Si le véhicule se déplace sur un des itinéraires **I,I',I"** mémorisés, alors les informations trafic qui lui sont communiquées sont celles d'une zone d'intérêt active Z* correspondant à la zone d'intérêt Z, Z', Z" de l'itinéraire **I,I',I"** effectivement emprunté.

Comme représenté sur la figure 5, si, lorsque l'utilisateur indique qu'il effectue le trajet T_{AB}, la position courante du véhicule VA déterminée par le système est englobée dans deux zones d'intérêt distinctes, par exemple Z,Z', alors la position courante peut correspondre à deux itinéraires mémorisés **I,I"**. Dans ce cas, la zone d'intérêt active Z* est la réunion des zones d'intérêt Z, Z" .

Ce cas arrive notamment lors du début du parcours du trajet, à proximité du point de départ A.

Le procédé ci-dessus est implémenté dans un système pour lequel plusieurs configurations sont possibles. Par exemple, l'unité embarquée communique des données à un serveur central qui effectue les calculs et les mises à jour des zones d'intérêt et les transmet en retour à l'unité embarquée.

Mais, dans une autre configuration, les moyens de calcul peuvent être, en majorité, intégrés à l'unité embarquée qui détermine et met à jour les zones d'intérêt.

Un tel système permet, dans le cas d'un déplacement sur un trajet habituel, de communiquer à l'utilisateur des informations de trafic grâce à une sélection géographique intelligente des évènements de façon à ce qu'il ne soit pas déconcentré lors de la conduite du véhicule par des informations qui ne le concernent pas.

Ainsi, parmi les informations de trafic qu'il reçoit, le système communique à l'utilisateur uniquement celles qui sont plus particulièrement susceptibles de le concerner en considérant des itinéraires de ce trajet précédemment empruntés.

## Revendications

1. Procédé de détermination, dans un système d'aide à la navigation d'un utilisateur de véhicule automobile (VA), d'une zone d'intérêt (Z) englobant un des itinéraires (**I**) d'un trajet (T_{AB}) effectué régulièrement, pour fournir, à un utilisateur du système, des informations de trafic relatives à cette zone d'intérêt (Z), comprenant les étapes de :
- Mémorisation de plusieurs points de passage (x₁, X₂, X₃) de l'itinéraire (**I**) effectivement emprunté;
- Découpage de l'itinéraire (**I**) effectivement emprunté en un ou plusieurs segments adjacents (S₁, S₂, S₃, S₄), les extrémités de chaque segment (S₁, S₂, S₃, S₄) correspondant à des points de passage sélectionnés parmi les points de passage effectifs (x₁, x₂, x₃) ;
- Détermination pour chaque segment (S₁, S₂, S₃, S₄) d'une zone géographique élémentaire (E₁, E₂, E₃, E₄) englobant ce segment;
- Constitution de la zone d'intérêt (Z) par réunion des zones géographiques élémentaires (E₁, E₂, E₃, E₄) et mémorisation de cette zone d'intérêt (Z).

2. Procédé selon la revendication 1, dans lequel l'itinéraire (**I**) est découpé en plusieurs segments adjacents (S₁, S₂, S₃, S₄), si la distance (d) séparant le point de départ (A) et d'arrivée (B) du trajet (T_{AB}) est supérieure à une valeur prédéterminée.

3. Procédé selon la revendication 2, dans lequel le découpage est effectué de telle manière que les extrémités de chaque segment (S₁, S₂, S₃, S₄) sont séparées par une distance inférieure à la valeur prédéterminée.

4. Procédé selon l'une des revendications précédentes, dans lequel chaque zone géographique élémentaire (E₁, E₂, E₃, E₄) relative à un segment (S₁, S₂, S₃, S₄) est une ellipse englobant les points de passage (x₁, x₂, x₃) de l'itinéraire (**I**) effectivement emprunté qui sont séparés du segment (S₁, S₂, S₃, S₄) par une distance (c) inférieure à la demi-longueur de ce segment (S₁, S₂, S₃, S₄).

5. Procédé selon l'une des revendications précédentes, dans lequel lorsque l'utilisateur effectue le trajet (T_{AB}) en empruntant un nouvel itinéraire (I') dont au moins un des points de passage (x'₁, x'₂, x'₃) diffère des points de passage (x₁, x₂, x₃) d'un des itinéraires mémorisés (**I**), alors le nouvel itinéraire (I') est mémorisé pour définir une nouvelle zone d'intérêt (Z') correspondant à un autre itinéraire (I') possible pour le trajet (T_{AB}) régulièrement effectués.

6. Procédé selon l'une des revendications précédentes, dans lequel lorsque l'utilisateur effectue le trajet (T_{AB}) une zone d'intérêt active (Z*) est sélectionnée parmi les zones d'intérêt mémorisées (Z, Z'), dès que la position courante du véhicule (VA) est englobée dans une seule des zones d'intérêt mémorisées (Z, Z').

7. Procédé selon la revendication 6, dans lequel lorsque la position courante est englobée dans deux zones d'intérêt distinctes (Z,Z'), la zone d'intérêt active (Z*) est l'intersection des zones d'intérêt (Z,Z').

8. Procédé selon une des revendications précédentes, dans lequel lorsque le point de départ (A) et le point d'arrivée (B) du trajet (T_{AB}) régulièrement effectué sont séparés par une distance (d) inférieure à la valeur prédéterminée, tous les itinéraires (**I,I',I"**) de ce trajets (T_{AB}) sont définis par un seul segment (S) et la zone d'intérêt (Z) est définie par une unique ellipse, et dans lequel les paramètres de cette ellipse sont mis à jour pour que cette ellipse englobe chaque point de passage (x₁, x₂, x₃, x'₁, x' ₂, x' ₃, x"₁, x"₂, x"₃) du ou des itinéraires (**I,I',I***"*) effectivement empruntés pour lequel la distance (c) séparant ce point de passage du segment (S) est inférieure à la demi-longueur de ce segment (S).

9. Système d'aide à la navigation d'un utilisateur de véhicule automobile (VA) comprenant des moyens de géopositionnement du véhicule (VA), des moyens de mémorisation de points de passage (x₁, x₂, x₃, x'₁, x'₂, x'₃, x"₁, x"₂, x"₃) du véhicule (VA), des moyens de transmission à l'utilisateur d'informations de trafic concernant des évènements se déroulant dans une zone d'intérêt (Z, Z', Z" , Z*), des moyens de saisie permettant à l'utilisateur d'indiquer que le véhicule (VA) effectue un trajet (T_{AB}) régulier entre un point de départ (A) et un point d'arrivée (B), et des moyens de mise en oeuvre du procédé selon l'une des revendications précédentes.
